(19) Europäisches Patentamt
European Patent Office
Office européen des brevets

(11) EP 1 017 993 B1

(12) **EUROPEAN PATENT SPECIFICATION**

(45) Date of publication and mention
of the grant of the patent:
**15.04.2009 Bulletin 2009/16**

(51) Int Cl.:
***G01N 21/31*** *(2006.01)*

(21) Application number: **98944143.1**

(22) Date of filing: **24.09.1998**

(86) International application number:
**PCT/IB1998/001492**

(87) International publication number:
**WO 1999/015880 (01.04.1999 Gazette 1999/13)**

(54) **SPECTROSCOPIC ANALYSIS OF SAMPLES WITH TURBIDITY AND HIGH ABSORBANCE**

SPEKTRALANALYSE VON PROBEN MIT TRÜBUNGEN UND HOHEM ABSORPTIONSVERMÖGEN

ANALYSE SPECTROSCOPIQUE D'ECHANTILLONS PRESENTANT UN TROUBLE ET UNE ABSORBANCE ELEVEE

(84) Designated Contracting States:
**AT BE CH CY DE DK ES FI FR GB GR IE IT LI LU MC NL PT SE**

(30) Priority: **25.09.1997 US 60018**

(43) Date of publication of application:
**12.07.2000 Bulletin 2000/28**

(73) Proprietor: **Siemens Healthcare Diagnostics Inc. Tarrytown, NY 10591 (US)**

(72) Inventors:
• **CHILDS, James, J.**
**Franklin, MA 02038 (US)**
• **SCHARLACK, Ronald, S.**
**Brookline, MA 02146 (US)**

(74) Representative: **Maier, Daniel Oliver et al**
**Siemens AG**
**CT IP**
**Postfach 22 16 34**
**80506 München (DE)**

(56) References cited:
**EP-A- 0 210 417      EP-A- 0 415 401**
**EP-A- 0 522 674      EP-A- 0 693 682**
**WO-A-94/08237**

• **DATABASE WPI Section Ch, Week 7933 Derwent Publications Ltd., London, GB; Class B04, AN 79-60637B XP002086008 & JP 54 084781 A (HITACHI), 5 July 1979**

# EP 1 017 993 B1

**Description**

CROSS REFERENCE TO RELATED APPLICATIONS

This application claims priority under 35 U.S.C. § 119(e) to provisional patent application serial number 60/060,018, filed September 25, 1997; the disclosure of which is incorporated herein by reference.

STATEMENT REGARDING FEDERALLY SPONSORED RESEARCH OR DEVELOPMENT

Not Applicable

BACKGROUND OF THE INVENTION

The estimation of concentrations of one or more components of a multicomponent sample is typically performed by spectroscopic analysis. Generally, the presence of other components within a sample makes it difficult to determine the concentration of a single component within a sample from a single measurement. Multiple measurements are required, and a multivariate technique is used to determine the concentration of a specific component from the measurements. Certain assumptions can be made about a sample measurement spectrum. Each component of a multicomponent sample has an individual absorption spectrum, and the absorbance spectrum of the multicomponent sample can be assumed to be the linear combination of the absorbance spectra of each component of the multicomponent sample. Further, the absorbance spectrum of each component of the multicomponent sample is linearly proportional to the concentration of the component within the multicomponent sample.

The analysis of absorbance in turbid and inhomogeneous samples has proven to be difficult, and is further complicated if the sample has high absorbance. A radiation source provides radiation, typically light, through the sample, with a detector detecting the amount of radiation passing through the sample. For turbid and/or high absorbance samples, some of the provided light is scattered, and may become undetected by the detector. In addition detected scattered light may have traversed the sample in a circuitous way, giving rise to multiple path lengths. All these effects caused by the scattering lead to erroneous readings of absorbance factors of the samples being analyzed. Further, some turbid samples may consist of relatively large interparticle spaces where no absorbance occurs, thus allowing some light to pass through undiminished. This may also result in erroneous readings of absorbance factors of the sample. A particular example of this is in the analysis of whole blood for hemoglobin.

Traditionally, when analyzing whole blood for hemoglobin, the blood must be preconditioned to remove turbidity and adjustments made to ensure that the measurement takes place within the optimal absorbance range of the analysis instrument. The turbidity of the blood is reduced or eliminated by disrupting the red blood cells in the sample in order to release the hemoglobin. The absorbance is adjusted by dilution of the blood or by appropriate choice of sample cell dimensions.

Prior attempts to perform analysis of turbid and/or high absorbance samples have included utilizing specialized apparatus that collects the scattered light as well as the directly transmitted light. Others have utilized an integrated sphere to perform the collection of the scattered light and the directly transmitted light. A further attempt utilized only pre-selected monochromatic wavelengths chosen for a particular application. It would be desirable to perform analysis of turbid and/or high absorbance samples without having to precondition the sample and without having to utilize specialized light collection devices.

WO-A-9408237 relates to spectrophotometric measurements on whole blood wherein corrections are made for the effects of light scattering. Here, n measuring wavelengths are employed to measure k constituent components, the n-k extra equations providing means by which n-k scattering factors can be compensated. Specific and nonspecific light scattering factors are considered and scattering factors for each of these factors are described as linear functions of the concentrations of the hemoglobin species present. In EP-A-0210417, the concentrations of blood components are determined on the basis of pre-determined coefficients representing the light absorption characteristics of each blood component at the measurement wavelengths. Errors due to turbidity are compensated by treating them in an analogous way to the blood components, using predetermined coefficients to represent the absorption characteristic of turbidity at each of the measurement wavelengths. A "concentration" of turbidity is determined and used thereafter for the compensation.

BRIEF SUMMARY OF THE INVENTION

The present invention provides a method for determining estimations of the concentration of one or more components of a blood sample according to clam 1.

The analysis utilizes the information from multiple factors that affect transmittance or absorbance of light through the sample. These factors include: absorbance as measured in a non-turbid sample, scattering losses due to particles and limitations of the measurement device as measured in a non-absorbing sample, additional scattering losses due to sample absorbance, variable path length effects due to the sample (scatter, bubbles, obstructions and the like), variable path length effects due to the measurement device, and additional nonlinear effects. By taking into account additional factors that affect transmittance or absorbance, a more accurate analysis is achieved.

The present invention, by taking into account non-linear factors as part of the determination of the concentrations of the components of a multicomponent sample is able to provide a more accurate estimation of the concentrations of the components of the multicomponent sample in the presence of scatter, bubbles, obstructions and the like.

BRIEF DESCRIPTION OF THE SEVERAL VIEWS OF THE DRAWINGS

The invention will be more fully understood from the following detailed description taken in conjunction with the accompanying drawings in which:

Fig. 1 is a graph of an absorbance spectrum of a normal sample and an obstructed sample;
Fig. 2 is a flow chart of the presently disclosed method for determining analysis of samples;
Fig. 3 is a flow chart of the presently disclosed method for determining a residual vector for determining analysis of samples; and
Fig. 4 is a block diagram of a spectrometer of the present invention.

DETAILED DESCRIPTION OF THE INVENTION

The analysis of the absorbance spectrum of a sample that is turbid and/or has high absorbance can be performed using conventional spectroscopic equipment. The analysis of the absorbtion spectrum of a sample is described in terms of absorbance, as opposed to transmittance. Absorbance is defined as the ability of a layer of a substance to absorb radiation, while transmittance for the purposes of this application is defined as the fraction of radiant energy that having entered a layer of absorbing matter reaches its farther boundary. The relationship between absorbance and transmittance is defined by the equation :

$$a = -\ln t$$

Where: a is the absorbance, and
t is the transmittance

The measured spectrum of an ideal sample can be described as:

$$a = E * c$$

where: $a$ is the column vector denoting the absorbance at particular wavelengths,
$E$ is a matrix of column vectors, each denoting the spectrum of a component or factor at a particular wavelength, and
$c$ is a column vector describing the particular concentrations of components or factors, which may include scatter terms.

Difficulties occur when attempting to measure samples which are nonlinear, such as samples which are inhomogeneous, or when scattering and instrument configuration cause the light path through the sample to have multiple path lengths. The averaging of transmittance over the multiple path lengths does not result in an averaging of absorbances, due to the nonlinear relationship between transmittance and absorbance, as described above. Instead the averaging of the transmittance in this case can be characterized by a nonlinear function of absorbance, such as $\cosh(\alpha)$, which can then be included in the analysis by treating the nonlinear term as an additional component. For example the square of the absorbance is an excellent approximation for this nonlinear term. For nonlinear terms the spectrum becomes :

$$a = E_{nl} * c_{nl}$$

where:

$$\mathbf{E_{nl}} \equiv [\mathbf{E} \mid f(\mathbf{a})]$$
$$\mathbf{c_{nl}} \equiv [\mathbf{c}/\mathbf{c}_{f(\mathbf{a})}]$$

where $f(a)$ is the nonlinear term(s), and where $c_{f(a)}$ is the concentration associated with the nonlinear term(s).

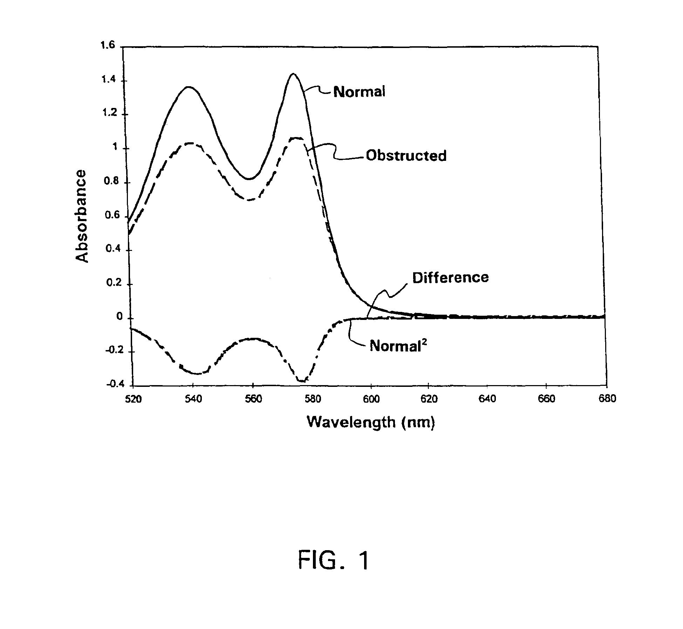

In a specific example, the use of a nonlinear component to detect and correct for sample inhomogeneity or instrument effects for lysed blood is shown. In this example, sample chamber obstructions produce an inhomogeneous measurement zone that interferes with normal optical measurements. The nature of many of these obstructions is to create a zone in which blood is excluded. This exclusion results in higher optical transmittance for that area. An example of two sequential samples of the same lysed blood sample is shown in Fig. 1. The sample with the higher absorbance gives the normally expected spectrum, as indicated by the waveform labeled "Normal". The sample with the obstruction has an abnormally low absorbance, as shown in the waveform labeled "Obstructed". The difference between these spectra is shown as the dotted line labeled "Difference". The difference is modeled by the square of the normal absorbance multiplied by a negative constant labeled "Normal[2]" which almost exactly overlays the "Difference" waveform.

The fractions and tHb levels predicted by a known method are shown below in Table 1. Notice that the tHb level drops and that the fractions change dramatically.

**TABLE 1**
**Previous Method**

| tHb | Hhb | O2Hb | COHb | MetHb | Scatter1 | Scatter2 | Lysed[2] | FIT |
|---|---|---|---|---|---|---|---|---|
| 14.79 | -1.94 | 102 | 0.63 | -0.4 | -0.7 | | | 1.63E-04 |
| 12.37 | 8.17 | 82.39 | 3.24 | 6.2 | -1.06 | | | 2.23E-03 |

The fractions and tHb levels predicted for the same two samples using the presently disclosed method are shown below in Table 2. In this instance the tHb change is less than 0.3 g/dL and the worst case fraction change is only approximately 2%. It should also be noted that the Lysed[2] estimate is a relatively large negative value for the obstructed sample as compared with the normal sample. The large negative value is typical for most obstructions, though some obstructions can cause positive values.

**TABLE 2**
**Presently Disclosed Method**

| tHb | Hhb | O2Hb | COHb | MetHb | Scatter1 | Scatter2 | Lysed[2] | FIT |
|---|---|---|---|---|---|---|---|---|
| 14.49 | -0.73 | 99.91 | 0.69 | 0.13 | -1.15 | 0.36 | 0.00592 | 7.68E-05 |
| 14.22 | -2.22 | 99.16 | 2.75 | 0.31 | 0.76 | -0.58 | -0.0428 | 1.95E-04 |

The present method operates by first estimating the fractions (100% O2Hb is assumed) then using the square of this spectrum as an additional component in the least squares analysis. The square of the new estimated spectrum (based on the resulting fractions obtained in the least squares estimation) is then incorporated and the process is then repeated until the fraction values converge. Typically only 2 or 3 iterations are required if the first estimate is good.

The convergence process is illustrated below in Table 3 using the obstructed sample as an example.

**TABLE 3**
**Convergence of the Presently Disclosed Method with an Obstructed Sample**

| tHb | Hhb | O2Hb | COHb | MetHb | Scatter1 | Scatter2 | Lysed[2] | FIT |
|---|---|---|---|---|---|---|---|---|
| 14.25 | -1.69 | 99.15 | 2.25 | 0.3 | 0.81 | -0.69 | -0.0430 | 2.14E-04 |
| 14.22 | -2.2 | 99.15 | 2.73 | 0.31 | 0.76 | -0.58 | -0.0428 | 1.95E-04 |
| 14.22 | -2.22 | 99.16 | 2.75 | 0.31 | 0.76 | -0.58 | -0.0428 | 1.95E-04 |

The definition of the Lysed[2] term is illustrated as follows. When the sample is inhomogeneous or when the path of light through a sample is not single valued, such as when the light is highly diverging or converging, or when the sample includes bubbles or other obstructions, the transmittance is defined as the average of the transmittances of all light rays. Absorbance, as described earlier, is the negative log of transmittance. For simplicity and without loss of generality, consider only two such light rays that traverse the sample with different pathlengths. The absorbances of the two rays may be written as $\alpha + \delta$ and $\alpha - \delta$ respectively, where $2\delta$ represents the absorbance difference between the two paths taken by the rays. The total absorbance measured is then given by

$$Abs = -\ln \ (e^{-\alpha+\delta} + e^{-\alpha-\delta})/2 \ [\text{WSGH1}]$$

This expression can be simplified by removing the common factor $e^{-\alpha}$.

$$Abs = -\ln e^{-\alpha} - \ln (e^{+\delta} + e^{-\delta})/2$$

Further simplifying the expression and recognizing that the second term contains the hyperbolic cosine:

$$Abs = \alpha - \ln[\cosh \delta]$$

The natural log and hyperbolic cosine can be expanded into a series as follows:

$$\cosh \delta = 1 + \delta^2/2! + \delta^4/4! + ...$$

$$\ln 1+x = x - x^2/2 + x^3/3 - ...$$

Using these expansions in the expression for absorbance gives:

$$Abs = \alpha \ - \delta^2/2 \ (1 + \delta^2/12 + \delta^4/360 + ...) + \delta^4/8 \ (1 + \delta^2/12 + \delta^4/360 + ...)^2 + ... \ .$$

For reasonably small values of $\delta$ the above expression can be simplified to :

$$Abs = \alpha - \delta^2/2$$

Using the assumption that the deviation $\delta$ from the average absorbance $\alpha$ is typically proportional to $\alpha$, the above expression becomes:

$$Abs = \alpha - k * \alpha^2$$

where $k$ is a proportionality constant.

It should be noted that this expression is in the form of the approximation used to model the measured absorbance $\alpha$. The constant $k$ is determined during the least squares analysis. Although the process has a nonlinear term $\alpha^2$,

the present method uses an iterative linear least squares process in which the nonlinear term is treated as an additional linear term which is fixed for the iterative step. It should also be noted that higher order terms in the above expansion may be included in the analysis described herein as needed.

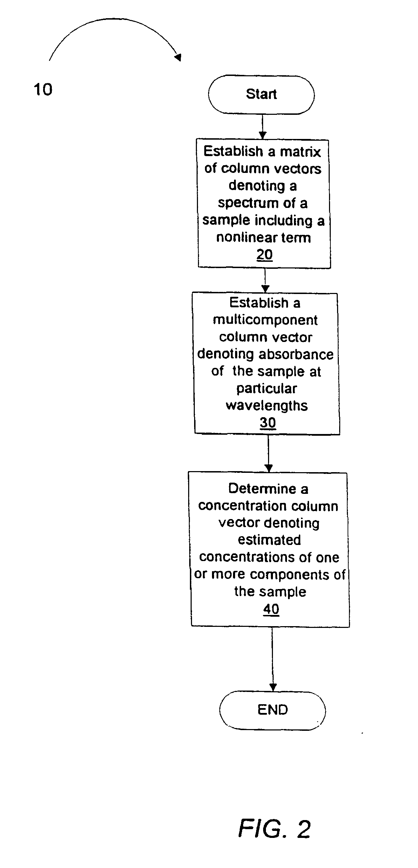

The presently disclosed method is shown generally in Fig. 2. The method includes a first step 20 in which a matrix of column vectors is established. Each column vector of the matrix denotes a spectrum of a component of the sample at particular wavelengths and further includes a nonlinear term as part of the matrix of column vectors. The nonlinear term takes into account the effects of absorbance as measured in a nonturbid sample, scattering losses due to particles and limitations of the measurement apparatus, additional scattering losses due to absorbance, variable path length effects due to the sample, variable pathlength effects due to the measurement apparatus and additional nonlinear effects.

At the next step 30 a multicomponent column vector denoting absorbance of the multicomponent sample at particular wavelengths is established.

At step 40 a concentration column vector denoting estimated concentrations of one or more components is determined, such as by dividing the matrix of column vectors by the first column vector. The resulting second column vector of estimated concentrations is more accurate than prior art methods since the effect of nonlinear factors has been integrated into the determination of the matrix of column vectors from which the second column vector is determined.

In certain instances the instrument or sample effects are difficult to determine by $\alpha$ *priori* analysis. For example, variations in the refractive index of the sample, also known as anomalous dispersion, cause scatter that varies with the concentration of the sample components. This scatter can be characterized by a method that incorporates known information about the sample by a hybrid method of analysis. Unknown components of the sample or instrument effects can also be considered using this method.

The absorbance spectra of a sample (as measured in a non-turbid sample) can be estimated using reference methods to determine the concentrations of the sample components and combining this information with known absorbance spectra of the components as shown :

$$\mathbf{a}_{ref} \approx \mathbf{E} * \mathbf{c}_{ref}$$

where: $\mathbf{a}_{ref}$ is the estimated absorbance,
$\mathbf{E}$ is a matrix of column vectors, each denoting the spectrum of a component or factor at a particular wavelength, and
$\mathbf{c}_{ref}$ is the estimated concentration from reference methods.

The estimated absorbance spectrum is combined with other estimated spectra from known components with unknown concentrations (e.g. scatter and/or the square of the absorbance) and the combined spectra used to approximate the measured absorbance using known techniques such as Least Squares Estimation (LSE).

$$\mathbf{c}_{trial} \approx ( \mathbf{E}'_{trial} * \mathbf{E}_{trial})^{-1} * \mathbf{E}'_{trial \bullet} \mathbf{a}_{measured}$$

where: $\mathbf{E}_{trial}$ is the combined spectra matrix, and
$\mathbf{c}_{trial}$ is the vector of estimated concentrations.

The difference or residual between the estimated spectrum and the measured spectrum is the approximation of the unknown component(s). This difference between the estimated spectrum and the measured spectrum is used as a vector or vectors in the analysis of future samples. Techniques such as Partial Least Squares (PLS), Principal Components Regression (PCR) and Classical Least Squares (CLS) can be used to determine vectors from residual spectra. CLS is then used to obtain concentrations of the vectors in a sample. If only a single component is known, then the vector for that single component can be determined via regression techniques of PLS or Principal Component Analysis (PCA) followed by regression testing.

$$\mathbf{r}_{exp} \approx \mathbf{E}_{trial} * \mathbf{c}_{trial} - \mathbf{a}_{measured}$$

where: $\mathbf{r}_{rxp}$ is the residual spectrum.

The analysis using a single residual vector is shown by :

$$c_{new} \approx (E'_{new} * E_{new})^{-1} * E'_{new} * a_{measured}$$

where:

$$E_{new} \equiv [E \mid v_{res}]$$

$v_{res}$ is (are) the vector(s) from the residual term(s), and $c_{new}$ is the vector of estimated concentrations

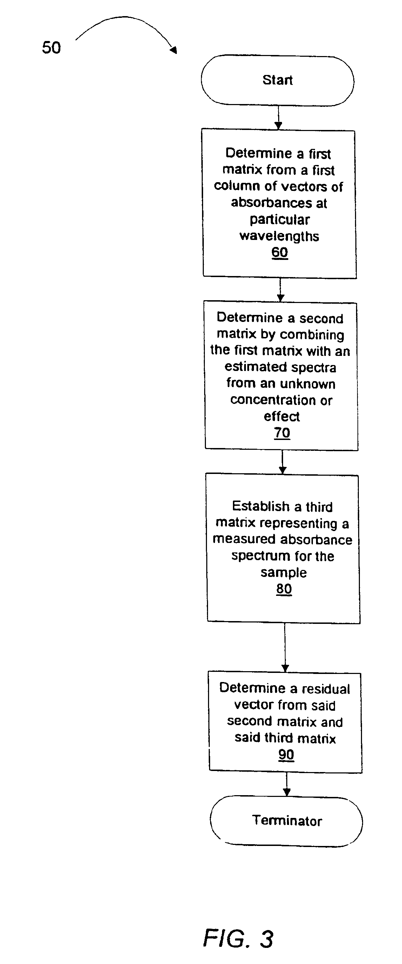

Referring now to Fig. 3 a flow chart of the method 50 for determining a residual vector for an unknown sample component or effect is shown. At the first step 60 a determination of a first matrix from a first column of vectors of absorbances at particular wavelengths is performed. At the next step 70 a second matrix is determined by combining the first matrix with an estimated spectra from an unknown concentration or effect. Next, at step 80, a third matrix representing a measured absorbance spectrum for the sample is determined. At step 90 a residual vector is determined from the second matrix and the third matrix. The residual vector is then utilized as part of the determination of sample concentrations in later measured samples.

A specific example of this is in the measurement of hemoglobin in lysed blood. The vectors utilized in the analysis are typically the major hemoglobin components of interest (e.g. $O_2Hb$, Hhb, COHb, MetHb), hemoglobin components of minor interest (SulfHb and CNMetHb), and a term for the scatter or the interference. This analysis by prior methods has proven to be inadequate for the accurate measurement of hemoglobin in whole blood.

A power law of wavelength can approximate losses due to simple particle scatter. Since the spectral shape of simple scatter as well as its magnitude vary with blood components and chemistry, multiple parameters are required for an adequate characterization.

Additional measurement effects must be included for accurate measurements. As stated above, hemoglobin is concentrated in red blood cells and the short path lengths required for reasonable optical measurements results in only a small number of cells being sampled by the light. This small number leads to results having significant variations in the number of cells across the measurements. These variations result in nonlinear absorbance variations. As described above, these variations can be approximated by the square of the absorbance. The square of the lysed blood absorbance results in better estimates than the square of the measured absorbance.

Since hemoglobin is a strong absorber, its absorbance causes variations in the refractive index of the red cells. This refractive index variation results in additional scatter that is not well characterized by simple particle scatter. Since each hemoglobin component has a unique spectrum, the scatter caused by the absorbance depends on the hemoglobin composition of the whole blood. In the presently disclosed method, this total hemoglobin scatter is treated as a linear combination of the hemoglobin scatter from the different hemoglobin components.

In an additional example, an analysis of hemoglobin in whole blood is shown.

The first step is to determine the vectors that represent hemoglobin scatter.

$$r_{exp} \approx E_{trial} \cdot c_{trial} - a_{measured}$$

Reference values for the samples are then used to determine the individual residual vectors by the following:

$$v_{res} \approx R_{exp} \cdot c'_{ref} \cdot (c_{ref} \cdot c'_{ref})^{-1}$$

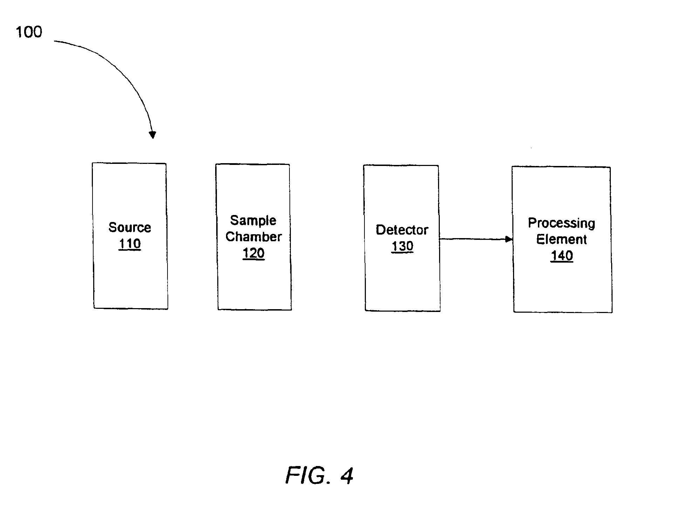

Referring now to Fig. 4 a measurement apparatus 100 for performing spectroscopic analysis for determining estimated concentrations of one or more components of a multicomponent sample is shown. The measurement apparatus 100 comprises an excitation source 110 that provides an excitation signal to a sample chamber 120. Sample chamber 120 includes a multicomponent sample therein. A detector 130 receives the excitation signal that may b modified by the sample with in the sample chamber 120. Processing element 140 is coupled to, or may be integrated with, detector 130 and determines the concentrations of components of the multicomponent sample. This determination includes the method described above in that the nonlinear effects are taken into account as part of the determination and thus provides amore accurate estimation of the component concentration of a multicomponent sample.

As shown above the presently disclosed method and apparatus provides for more accurate analysis of samples having turbidity and/or high absorbance by taking into account the effect of nonlinear parameters on the measurement. The nonlinear term is incorporated into the multivariate analysis resulting in increased accuracy of he analysis.

Having described preferred embodiments of the invention it will now become apparent to those of ordinary skill in the art that various modifications could be made to the presently disclosed invention. It is therefore submitted that the invention should not be limited to the described embodiments, but only by the scope of the appended claims.

**Claims**

1. A method for determining estimations of the concentration of one or more components of a blood sample using spectroscopic analysis comprising the steps of:

   estimating a matrix of vectors which represent the absorption spectra of individual components of said multicomponent sample and of vectors which represent other effects;
   estimating concentrations of one or more components of said multicomponent sample;
   using the estimated component concentrations to better refine one of the vectors that represent other effects; and
   repeating the process until a satisfactory estimate of component concentrations is obtained;

   **characterised in that:**

   said one of the vectors that represent other effects represents a nonlinear contribution and comprises the square of the estimated absorbance for a nonturbid sample of said blood sample.

2. The method of claim 1 wherein said blood sample comprises lysed blood.

**Patentansprüche**

1. Verfahren zum Bestimmen von Schätzungen der Konzentration einer oder mehrerer Komponenten einer Blutprobe unter Verwendung von spektroskopischer Analyse, welches die folgenden Schritte umfasst:

   Schätzen einer Matrix von Vektoren, welche die Absorptionsspektren einzelner Komponenten der besagten, mehrere Komponenten enthaltenden Probe repräsentieren, und von Vektoren, welche andere Effekte repräsentieren;
   Schätzen der Konzentrationen einer oder mehrerer Komponenten der besagten, mehrere Komponenten enthaltenden Probe;
   Verwenden der geschätzten Komponentenkonzentrationen, um einen der Vektoren, welche andere Effekte repräsentieren, besser zu verfeinern; und
   Wiederholen des Prozesses, bis eine zufrieden stellende Schätzung von Komponentenkonzentrationen erhalten wurde;

   **dadurch gekennzeichnet, dass:**

   der besagte eine der Vektoren, welche andere Effekte repräsentieren, einen nichtlinearen Beitrag darstellt und das Quadrat der geschätzten Extinktion für eine nicht trübe Probe der besagten Blutprobe umfasst.

2. Verfahren nach Anspruch 1, wobei die besagte Blutprobe lysiertes Blut umfasst.

**Revendications**

1. Procédé de détermination d'estimations de la concentration d'un ou plusieurs constituants d'un échantillon de sang en utilisant une analyse spectroscopique, comprenant les stades dans lesquels :

   on estime une matrice de vecteurs qui représentent les spectres d'absorption des constituants individuels de l'échantillon à constituants multiples et de vecteurs qui représentent d'autres effets ;
   on estime des concentrations de l'un ou de plusieurs constituants de l'échantillon à constituants multiples ;

on utilise les concentrations estimées de constituants pour mieux raffiner l'un des vecteurs qui représentent d'autres effets ; et

on répète l'opération jusqu'à l'obtention d'une estimation satisfaisante des concentrations des constituants ;

**caractérisé en ce que**

l'un des vecteurs qui représentent d'autres effets représente une contribution non linéaire et comprend le carré du facteur d'absorption estimé d'un échantillon non trouble de l'échantillon de sang.

2. Procédé suivant la revendication 1 dans lequel l'échantillon de sang comprend du sang lysé.

FIG. 1

10

```
┌─────────────┐
│    Start    │
└─────────────┘
       │
       ▼
┌─────────────────────┐
│  Establish a matrix │
│ of column vectors   │
│    denoting a       │
│   spectrum of a     │
│ sample including a  │
│  nonlinear term     │
│        20           │
└─────────────────────┘
       │
       ▼
┌─────────────────────┐
│   Establish a       │
│  multicomponent     │
│   column vector     │
│ denoting absorbance │
│  of the sample at   │
│    particular       │
│   wavelengths       │
│        30           │
└─────────────────────┘
       │
       ▼
┌─────────────────────┐
│    Determine a      │
│ concentration column│
│  vector denoting    │
│    estimated        │
│ concentrations of one│
│ or more components of│
│    the sample       │
│        40           │
└─────────────────────┘
       │
       ▼
┌─────────────┐
│     END     │
└─────────────┘
```

*FIG. 2*

50

```
        ┌─────────────┐
        │    Start    │
        └─────────────┘
              │
              ▼
    ┌───────────────────┐
    │ Determine a first │
    │ matrix from a first│
    │ column of vectors of│
    │ absorbances at    │
    │ particular        │
    │ wavelengths       │
    │        60         │
    └───────────────────┘
              │
              ▼
    ┌───────────────────┐
    │ Determine a second│
    │ matrix by combining│
    │ the first matrix with an│
    │ estimated spectra │
    │ from an unknown   │
    │ concentration or  │
    │ effect            │
    │        70         │
    └───────────────────┘
              │
              ▼
    ┌───────────────────┐
    │ Establish a third │
    │ matrix representing a│
    │ measured absorbance│
    │ spectrum for the  │
    │ sample            │
    │        80         │
    └───────────────────┘
              │
              ▼
    ┌───────────────────┐
    │ Determine a residual│
    │ vector from said  │
    │ second matrix and │
    │ said third matrix │
    │        90         │
    └───────────────────┘
              │
              ▼
        ┌─────────────┐
        │ Terminator  │
        └─────────────┘
```

FIG. 3

100

| Source<br>110 | Sample<br>Chamber<br>120 | | Detector<br>130 | Processing<br>Element<br>140 |

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60060018 B
- WO 9408237 A
- EP 0210417 A